# EUROPEAN PATENT APPLICATION

(11) **EP 2 026 262 A1**
(43) Date of publication of application: **18.02.2009**
(21) Application number: 08014556.8
(22) Date of filing: 15.08.2008
(51) Int. Cl.: G06Q 10/00

(54) **Method of editing & regenerating an automatic communication**

(30) Priority: 17.08.2007 GB 0716114
(71) Applicant: THUNDERHEAD LTD, Estree Hertfordshire WD6 3SY (GB)
(72) Inventor: McLennan, James, Brentwood, CM13 1AG (GB)
(74) Representative: Turnbull, Alexander James

(57) **Abstract**

A method of editing and regenerating an automatic communication to be sent to a recipient, the automatic communication being generated by applying data to a response template comprising data definitions and conditional criteria, wherein the step of regenerating the edited communication includes the step of storing the edited changes optionally within the regenerated communication or as the edited communication stored in a data store.

## Description

Many businesses require that communication be provided when certain events occur. One such example is the insurance business; where annual renewal notices and offers require to be sent. Another such example lies with the banking business, where communications concerning accounts require to be provided when certain events occur to accounts, such as exceeding overdraft limits. Another example is to be found in Internet trading, where a customer may provide details and requirements to which a response is required. Yet another example is to be found in share, commodities and options trading, where a contract of some kind may be required. Another such example is to be found where a contract is required which has been tailored to individual needs and circumstances.

In other circumstances, it may be required that a plurality of recipients be contacted, for example in an opinion poll, or to receive advertising or any other offer or promotion.

The present invention seeks to provide a method and means whereby such communication can readily be set up and provided.

One communication recipient may prefer one medium of communication, while another communication recipient may prefer another. The present invention seeks to provide ready means to provide communication on whatever medium the recipient prefers.

The exact nature and style of a communication depends upon which medium is being employed. One medium may require a full and formal approach. Another medium may favour an informal approach. The present invention seeks to provide means whereby the message can automatically be styled and selected to suit each medium.

The required language of a message varies from individual communication recipient to individual communication recipient. In Europe, for example, organisations may be required to provide communication in many different languages. The present invention seeks to provide means whereby the language can readily and automatically be matched to the recipient.

The required idiom of a message also varies from individual communication recipient to individual communication recipient. Formal language may be appropriate for some recipients. Informal language may be more appropriate for others. The present invention seeks to provide method and means whereby the idiom of a message can be matched with the appropriate idiom requirements of the individual recipient.

The exact content of a communication can depend upon within which legal jurisdiction a recipient is situated. A contract, acceptable within one territory, may not be acceptable within another. A different set of terms and conditions may be required. One prime example of this situation is to be found in the United States of America, where every State and territory has its own legal code. Another example is to be found within the European Union, where each member state has its own laws and peculiarities. Variation can even occur within a state. The United Kingdom, for example, has separate legal systems in a) England and Wales, b) Scotland and c) Northern Ireland. Added to that, the United Kingdom also has the territories of the Isle of Man and the Channel Islands, which are legally separate and do not even belong to the European Union. Switzerland has all of its separate Cantons. Germany has all of its states and Italy all of its regions. The list is endless and poses a problem which the present invention seeks to overcome with the minimum of inconvenience.

The construction, activation and direction of automated communication messages has been a difficult task, more appropriate, until now, to the Information Technology department of an organisation than to any other because such automation has generally required knowledge and experience of computer programming languages. The need for inter-departmental consultation meant that the process was slow, and that the resultant communication process often lacked desirable features. The present invention seeks to provide method and means whereby automated messages can easily, rapidly and comprehensively be created, allowing other more directly involved individuals to take control of the process, and also allowing organisations, too small or specialised to have an Information Technology department, to avail themselves of automated communication.

Automated communication often requires that a standard document needs additions made thereto. One such situation arises where a stock or share trading deal requires to be supported by a contract where certain features must be selected by the trader making the deal. There is a risk of errors or unwanted content creeping in to the completed contract. A similar situation appears where an inexperienced, unqualified or semi-qualified individual is involved with a contract or other document. The present invention seeks to provide a method and means whereby the risk of error and of inclusion of unwanted content is minimised.

In WO 2005/036429, the contents of which are hereby incorporated by reference, the applicants of the present invention disclose a method and system for automatically providing responses to recipients over a variety of communication media. According to WO 2005/036429, an event can trigger the automatic generation of a letter to a recipient where the letter is generated using a letter template stored within the memory store of a computer. The letter template comprises embedded logic which is addressed by data input from, for example, a data store. The data input may include details such as name and address of a recipient and also details such as credit rating, age and a policy renewal date. When an event occurs such as a policy renewal date a letter is automatically generated based upon the data input from the data store. The embedded logic within the template letter determines the final form of the output letter. For example, the age of a recipient which is a variable in the data store calculated from a date of birth value may trigger alternative passages of text to be inserted automatically within a letter. This may occur if certain offers are available only to recipients over or under a certain age.

In WO 2005/036430, the contents of which are hereby incorporated by reference, the applicants of the present invention disclose a graphical user interface for use in the preparation of an automatically generated communication. The graphical user interface allows a response template to be built comprising embedded logic conveniently selected from a visual list of options. Such an approach has proved very popular amongst companies where such tasks were typically the exclusive domain of Information Technology specialists.

In WO 2005/036298, the contents of which are hereby incorporated by reference, the applicants of the present invention disclose a method in which following an automatic generation of a communication a user has an option of making further alterations to the communication in an alteration platform. Such further communications include the insertion within the communication of text inserts termed 'fixed content' in WO 2005/036298. The fixed content inserts selected by a user are provided by a processor and cannot be changed by the human operator of the modifying console, merely inserted. In an alternative embodiment, the human operator can also add new content, or, if pre-defined conditions allow, can amend selected content. If the user decides that no more insertions or amendments are necessary then the alterations platform can be exited and the communication dispatched by whatever communications media is preferred.

As the technology of products delivering the embodiments described in WO 2005/036429, WO 2005/036430 and WO 2005/036298 is rolled out and adopted by business users, the inventors of the present application have identified areas for innovation providing enhanced functionality and operational efficiency.

An example of an enhanced functionality requirement can arise during, for example, a derivative trade between two investment banks. In such a scenario, one bank may act as a buyer and one as a seller for an agreed trade. The bank acting as the seller typically stores the details of the trade in a data store. The details of the trade may be referred to as transaction data and include data such as name, address, date of transaction and a value of consideration and the terms of the contract. The transaction data may change over time with for example varying exchange rates. The seller sends a document termed a Trade Confirmation Document to the buyer, which can be built dynamically and automatically from a rules-based template using embodiments described in WO 2005/036430, WO 2005/036298 and WO 2005/036429 above, whereby the rules determine what variable or fixed data to include and also what content to include in the letter.

In a scenario such as that described above there is often a need to refine the content of the document over a period of time as, for example, discussions evolve between parties. Such a refinement process takes the form of either changing the transaction data or manually changing the content of the document.

Where the transaction data is altered the rules driven template will regenerate causing a new document reflecting the changes in the transaction data to be produced.

Where the content of a document is edited this can take the form of textual addition, deletion or corrections to a previously generated document.

The inventors of the present invention have identified that problems arise where iterations of amendment are required to both the transaction data and document content. In a first embodiment, a document is rules driven such that the content of the document is determined by a fixed template using transaction data to drive rules which determine which paragraphs or data items are automatically included within the document. In another embodiment, a document is manually edited following generation of the document. However, if a document is manually edited and then subsequently regenerated the manual edits are lost unless the manual edits are themselves present in the transaction data.

According to a first aspect of the present invention there is provided a method of editing and regenerating an automatic communication to be sent to a recipient, the automatic communication being generated by applying data to a response template comprising data definitions and conditional criteria, the method comprising the steps of: automatically generating an initial communication in response to the data; passing the initial communication to be edited; editing the initial communication to generate an edited communication having edited changes; regenerating the edited communication in response to data to generate a regenerated communication; wherein the step of regenerating the edited communication includes the step of storing the edited changes optionally within the regenerated communication or as the edited communication stored in a data store.

The present invention therefore provides a method of editing data, regenerating a new document or communication using a rules-based template whilst preserving manual edits made to an earlier version of the communication or document.

The present invention advantageously incorporates means to edit data, means to implement manual edits to a document and means to compare at least two documents into a process accessible by a user through a single graphical user interface.

Preferably the data is transactional data.

Preferably, the method includes displaying the edited communication and the regenerated communication together on a split screen.

Preferably, displaying includes highlighting any differences between the edited communication and the regenerated communication.

The method according to the first aspect of the present may be repeated and therefore including editing the regenerated communication to generate an edited regenerated communication; regenerating the edited regenerated communication in response to data to generate a further regenerated communication and storing the edited regenerated communication and the edited communication in the data store.

Preferably, the method includes displaying the edited regenerated communication, the edited communication and the further regenerated communication on a split screen and optionally includes displaying the edited regenerated communication, the edited communication and the further regenerated communication as a list of one or more selectable options.

Preferably, the method includes storing data relating to the recipient in a data store; examining the stored data to determine if a communication is to be provided to the recipient and if a communication is to be provided to the recipient extracting stored data relating to the recipient from the data store and generating the automatic communication in response to the stored data.

Preferably, the method includes including selecting a final communication to be sent to the recipient and sending the final communication to the recipient.

Preferably, the data definitions point to data in the stored data, and data so pointed to is included in the selected text and data.

Preferably, the data definitions point to alternative fixed text items within the response template, and a fixed text item so pointed to is included in the selected text.

Preferably, conditional criterion in the response template automatically activate alternative selections of text and data according to whether the criterion is met or whether the criterion is not met.

Preferably, the method includes selecting, in response to the data, at least one medium from among a plurality of selectable media for providing the communication to the recipient; composing the communication in a form suitable for use on the or each of said at least one selected medium; and employing the or each of the selected medium to send the communication.

Preferably, the method includes composing the communication in a form suitable for use on a selected medium includes the step of applying a conditional criterion in the response template to the stored data in order to determine the medium.

Preferably, the response template includes a layout template which is used according to the selected medium.

Preferably, the layout template defines one or more place holders for content for the specific corresponding medium.

Preferably, the method includes storing data relating to the recipient includes the step of accepting data from at least one of: the Internet; a digital data transmission medium; telephonic text messages; telephonic voice messages; printed matter; other data files; and record data files.

Preferably, the method includes the conditional criteria in the response template include a criterion for determining the language of the communication, and the communication is composed accordingly in a selectable one of the plurality of languages, the particular one of the plurality of languages being selected in response to the extracted stored data relating to the recipient.

Preferably, the method includes using at least one element of the address of the recipient to determine the selected language, said at least one element being selected from at least one of: the country of the recipient; the state of the recipient; the region of the recipient; the city of the recipient; the postal code of the recipient; and the family name of the recipient.

Preferably, the conditional criteria in the response template include a criterion for determining the idiom of the communication, and the communication is composed accordingly in one of a plurality of idioms, the particular idiom being selected in response to the extracted stored data relating to the recipient.

Preferably, the conditional criteria in the response template include a criterion for determining a form of the communication suitable for use in a selectable one of a plurality of jurisdictions, the particular one of the plurality of jurisdictions being selected in response to the extracted stored data relating to the recipient.

Preferably, the method includes the step of using at least one element of the address of the recipient to determine the selected jurisdiction, said at least one element being selected from at least one of: the country of the recipient; the state of the recipient; the region of the recipient; the city of the recipient; and the postal code of the recipient.

According to a second aspect of the present invention, there is provided a carrier medium carrying software control code to, when running, implement the method according to the first aspect of the present invention.

According to a third aspect of the present invention, there is provided a computer system for editing and regenerating an automatic communication to be sent to a recipient, the automatic communication being generated by applying data to a response template comprising data definitions and conditional criteria, the system comprising: generation means operable to automatically generate an initial communication in response to the data; passing means operable to pass the initial communication to be edited; editing means operable to edit the initial communication to generate an edited communication having edited changes; regenerating means operable to regenerate the edited communication in response to data to generate a regenerated communication; wherein the system further comprises storing means for storing the edited changes optionally within the regenerated communication or as the edited communication stored in a data store.

By implementing the present invention, a user receives a system which can reduce operational risk. The operational risk arises when a document is automatically generated using a rules based template based upon data such as transactional data and over time the data changes whilst a user has manually edited the document. The present invention allows a user to maintain and compare manual edits within or against documents regenerated using amended data.

The functionality of the system is typically delivered in a browser-based environment enabling the system to be operational on a personal computer by, for example, a medium such as Internet Explorer. This functionality advantageously enables a user to achieve cost savings through efficiency gains and compatibility between computer networks.

Embodiments of the present invention will now be described, by way of example only, and with reference to the accompanying drawings in which:
Figure 1 is a schematic view of the type of environment where the present invention can be applied;
Figure 2 is a flow chart which shows the process involved in creating a response routine;
Figure 3 is a flow chart showing one example of how the acceptance of fixed text for a criterion, otherwise shown in Figure 2, can be used to provide varied options of fixed text to enhance the flexibility of the automatic response allowed by the present invention;
Figure 4 is a flow charge giving an example of just one way in which the acceptance and storage of fixed text, otherwise shown in Figure 3, can be accomplished;
Figure 5 is a flow chart showing how the human compiler completes the task of preparing an automatic response;
Figure 6 is a flow chart showing how the present invention is used to provide an automated response;
Figure 7 is a first screenshot showing a document edit mode;
Figure 8 is a second screenshot showing a data edit mode;
Figure 9 is a third screenshot showing an amended document;
Figure 10 is a fourth screenshot showing a split screen comparison between an edited communication and a regenerated communication;
Figure 11 is a fifth screenshot showing a split screen comparison between an edited communication and a regenerated communication;
Figure 12 is a sixth screenshot showing a split screen comparison between an edited communication and a regenerated communication; and
Figure 13 is a seventh screenshot showing a flow of screenshots highlighting a means of navigating between screens.

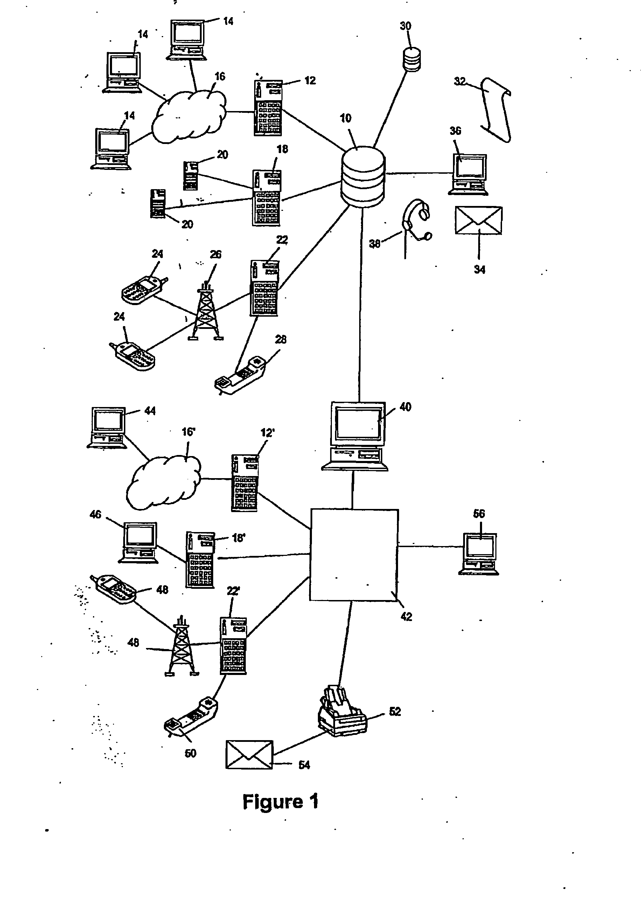

Attention is first drawn to Figure 1 showing a schematic view of the type of environment where the present invention can be applied.

A data store 10 can receive data from various sources. The data store 10 can receive written data from an Internet server 12 which derives data from Internet client 14 connected to the data store through the Internet 16. The sort of data which may be derived by the data store 10 from the Internet server 12 could be, as a set of non-restrictive examples, biographical or financial data filled in on a form, credit card numbers, birthdays, details of children and relatives, details of nationality, names and addresses, bids at auction, and so on. The data derived from the Internet server 12 will be any data for which some kind of response is required. The data store 10 can also receive data from a branch server 18 which communicates with remote servers 20 which can be situated in remote locations. An example of such remote servers would be, for example, servers connected with the individual branches of a bank, store or insurance company. Once again, the branch server 18 provides the data store 10 with data to which some kind of response should be generated.

The data store 10 can also receive data from a telephone server 22 operative to receive text messages from mobile telephones 24 coupled to the telephone server 22 by means of radio mast 26. The telephone server 22 is also coupled to communicate with landline telephones 28. While the telephone server 22 is here described as handling text messages, it is to be appreciated that the telephones 24, 28 are becoming progressively more sophisticated and can pass messages in many different forms of code. The present invention encompasses the ability of telephones 24, 28 to pass messages in any of the many forms of code which have become possible and which will become possible. The present invention also encompasses the possibility that automatic computerised voice decoding can be used to decode voice messages into a form usable by the data store 10.

The data store 10 can also receive data from other data sources 30. Other data sources 30 can be, for example, demographic and biographic data concerning individuals, their families and associations. A very good example of such data is to be found in the United Kingdom where copies of telephone directories or voters' registers, complete with addresses, can be purchased.

The data store 10 can also receive data from written communications 32 or mail 34 which can be entered by an operator at an input console 36. Equally, the operator at the input console 36 can input data to be data store from conversation via a telephone line 38.

The data store 10 is accessed by a processor 40 which supervises a communications package 42. The communications package 42 provides communications, according to the details of the data store 10, for individuals in the mode that the individual prefers. The communications package 42 can send a message to a recipient via the recipient's personal computer 44 connected to the Internet 16' through an Internet server 12'. Equally, the communications package 42 can send a message to a recipient processor 46 via a branch server 18'. Likewise, the communications package 42 can communicate via the telephone server 22' to deliver text or voice messages to a recipient mobile telephone 48 or a recipient landline telephone 50. The message sent from the communications package 42 can be a text message, or can be a voice message encoded by a voice encoder.

The communications package 42 may also send text material to a printer 52 which creates mail 54 to be posted to a message recipient.

Optionally, in some circumstances, the whole of a message cannot be compiled automatically by the communications package 42 and, for example where a contract must have terms inserted, must be modified and the correct terms provided before the communications package 42 can release the message for sending to the recipient. This is done by means of one or more modifying consoles 56. The nearly complete message is sent to the modifying console 56 which inserts the necessary terms and sends the message back to the communications package 42 for completion of the transmission process.

The arrangement, shown in Figure 1, is applicable to virtually any process where an organisation is required to respond to an approach or an event. The arrangement shown in Figure 1 can automatically process orders received from customers, can send out reminders and renewals for insurance companies, can provide balance sensitive information (such as overdraft warnings) to bank clients, can remind people that they are due for medical treatment, court appearances and a host of other things. The versatility and utility of the invention will become apparent as the preferred embodiment is described with respect to Figure 1 and the subsequent drawings.

The documents, created using the preferred embodiment of the invention, for preference use XML (eXtensible Markup Language), which is a widely used system for defining data formats. XML provides a very rich system to define complex documents and data structures such as letters, invoices, molecular data, news feeds, glossaries, inventory descriptions, real estate properties, and so on. As long as a programmer has the XML definition for a collection of data (often called a "schema") then they can create a program to reliably process any data formatted according to those rules. The invention is not limited to using XML, and can use any language, languages, program or programs, scheme or schemes whereby a document can be assembled according to the activities hereinbefore and hereinafter described for the present invention.

The preferred embodiment of the present invention is described in terms of a letter-writing routine used, just for this example, in an insurance renewal situation. However, it is to be appreciated that the preferred embodiment of the invention can also encompass all of the uses and possibilities hereinbefore described.

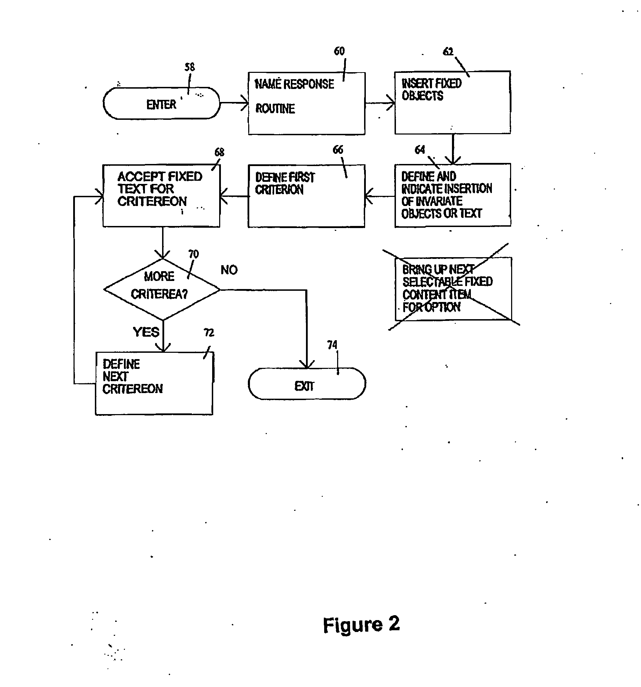

Attention is next drawn to Figure 2 which shows the process involved in creating a response routine.

Figure 2 shows how, simply by way of the example of the preferred embodiment, an individual might make up an automatic routine.

From entry 58 a first operation 60 prompts the compiler to provide a name for the automatic response routine. Thereafter, a second operation 62 has the compiler insert fixed objects to be printed upon the page. Such fixed objects may be images of banners, and other elements of letterhead.

A third operation 64 then has the compiler define and indicate the points of insertion of invariate objects or text. Such invariate objects may be, in this instance, the name and address of the recipient or recipients, the number or numbers of insurance policies, the renewal date and so on. The invariate objects or text can also include pictures of individuals and so on.

Having set up the basic layout of the letter or communication, a fourth operation 66 prompts the compiler to provide a definition of a first criterion for selecting a body of text to be inserted into the letter. The criterion is assembled, as will be explained at a later point, according to a plain language logic statement. The first criterion could be that an insurance policy is due for renewal within the next month.

A fifth operation 68, once the first criterion has been defined, accepts the fixed text which is to be inserted into the letter should the first criterion be fulfilled. The fixed text can also include other printable or representable material such as images, advertising banners and the like.

If a first test 70 detects an indication from the compiler that more criteria are to be accommodated by the response, a sixth operation 72 has the compiler define the next criterion and return control to the fifth operation 68. If the first test detects that no more criteria are to be accommodated, control passes to exit 74.

Figure 2 thus describes how a document can be assembled with different criteria prompting different contents.

Once the automatic response routine has been created, according to Figure 2, it can be stored for later use, or sent elsewhere for use. The automatic response routine also contains within itself means to implement its provisions, including, but not limited to, interface and instruction routines operative to control the various types of equipment shown in Figure 1.

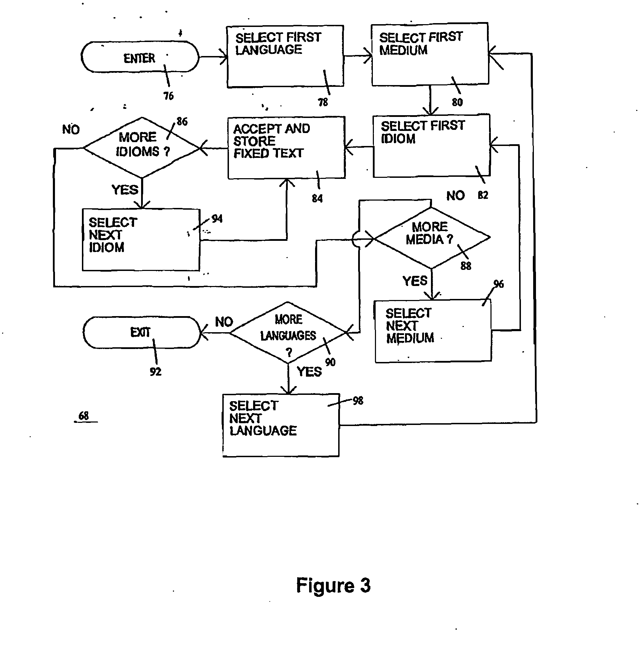

Attention is next drawn to Figure 3 which is a flow chart showing one example of how the fifth operation 68 of Figure 2 can be used to provide varied options of fixed text to enhance the flexibility of the automatic response allowed by the present invention.

From entry 76 a seventh operation 78 has the compiler select a first language in which a response is to be couched. An eighth operation 80 then has the compiler select a first medium by which the response is to be provided. A ninth operation 82 then has the compiler select which idiom is to be used.

By means of the seventh 78, eighth 80 and ninth 82 operations the compiler can select a language, a type of medium which is to bear the message, and a first idiom (either severe, moderate or friendly and so on).

As will be explained later, the compiler can also use the flow chart of Figure 3 to select one or more jurisdictions, each requiring different text, to which a particular fixed response is to be addressed.

Once these criteria have been selected, a tenth operation 84 then has the compiler provide the fixed text which is to be used should the particular criterion of Figure 2 be met. The compiler types in, pastes in, or provides the text by any other means. The compiler can also edit the fixed text. The text is only fixed when the response routine is responding to stimuli.

Having accepted the fixed text, a second test 86 prompts the compiler to see if there are any further idioms required for that medium and that language. If not, a third test 88 looks to see if there are any more media which are to be accommodated in that language and for that idiom. If not, a fourth test 90 looks to see if any more languages are to be provided. If no more than one language is to be provided, control passes to exit 92.

If the second test 86 detects that the compiler requires further idioms to be provided, an eleventh operation 94 prompts the compiler to select the next idiom and passes control back to the tenth operation 84 to accept and store the fixed text in the next selected idiom.

If the third test 88 detects that more media are to be accommodated in that language and for that criterion, control passes from the third test 88 to a twelfth operation 96 which looks for the compiler to select the next medium and then passes control the ninth operation 82 which looks for the selection of a first idiom for that medium and carries on as before.

If the fourth test 90 detects that more languages are to be used, a thirteenth operation 98 has the compiler select a next language and then passes control to he eighth operation 80 awaiting selection of the first medium which will be accommodated in the further language.

By the process of Figure 3, a plurality of different fixed messages are made available for use in an automatic response, suitable for use with a plurality of media and in a plurality of languages.

Moving ahead, perhaps, a little, a language can be selected for an automatic response on the basis of a postal code, an idiom on the basis of a geographical area, and a medium on the basis of a data flag held within the data relating to the individual in the data store 10.

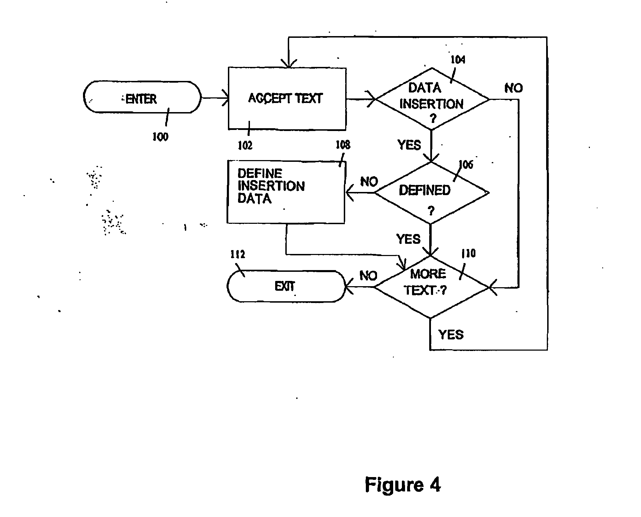

Attention is next drawn to Figure 4, a flow chart giving an example of just one way in which the tenth operation 84 of Figure 3 can be accomplished.

From entry 100 a fourteenth operation 102 accepts the fixed text characters provided by the compiler. A fifth test 104 looks to see if an item of data is to be inserted into the midst of the fixed text. Such an item of data insertion might be the individual name of the recipient, the insurance policy number (as an example), the date of renewal of the insurance policy and so on.

If the fifth test 104 finds that data is to be inserted, that data being defined by words contained within brackets, control passes to a sixth test 106 which looks to see if the data item has been defined. The compiler is required to define the data item so that it may be retrieved from the data store for insertion. If the data item has not been defined, the sixth test 106 passes control to a fifteenth operation 108 which accepts the definition of the undefined data for insertion from the compiler. Control then passes to a seventh test 100.

Another option is for a data item to be externally defined when required. The data item is re-defined in a "building" stage using a building module, and then re-attached to the response template.

If the sixth test 106 discovers that the data to be inserted has already been defined, control also passes from the sixth test 106 to the seventh test 110.

The seventh test 110 looks to see if more text is to be provided for inclusion in the fixed text item. If yes, the seventh test 110 passes control back to the fourteenth operation 102. If not, the seventh test 110 passes control to exit 112.

The functioning of Figure 4 shows how a fixed text response item can be assembled including insertion of relevant data to the text.

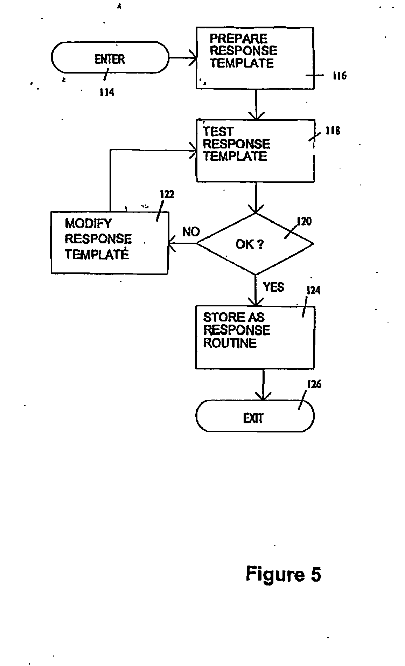

Attention is next drawn to Figure 5 showing how the compiler completes the task of preparing an automatic response. From entry 114 a sixteenth operation 116 has the compiler prepare a response template. The sixteenth operation 116 is described, in much greater detail, in Figure 2, Figure 3 and Figure 4.

Having prepared a prototype response template a seventeenth operation 118 allows the compiler to test the response template against trial data.

If an eighth test 120 finds that the compiler is dissatisfied with the automated response template an eighteenth operation 122 allows the compiler to modify the automated response template, passing control back to the seventeenth operation 118 for further testing.

Once the compiler is content that the automated response template is acceptable, the eighteenth operation 120 passes control to a nineteenth operation 124, and stores the prepared response template as a response routine which can be called up and used at any time. Control then passes to exit 126.

The processes shown in Figure 5 allow the compiler to fine tune the automated response template until it performs as required.

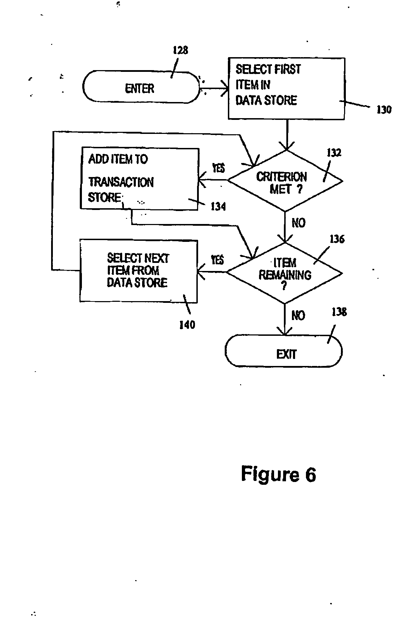

Attention is next drawn to Figure 6, showing a flow chart of how the present invention is used to provide an automated response.

From entry 128 a twentieth operation 130 interrogates the data store 10 and selects the first item therein. A ninth test 132 then checks to see if the first item accessed from the data store 10 meets the criterion for inclusion in providing an automated response. If the ninth test 132 detects that the criterion for an automated response is met, a twenty-first operation 134 adds the selected item in the data store to a transaction store ready for processing. The twenty-first operation 134 then passes control to a tenth test 136. If the ninth test 132 detects that the particular selected item from the data store 10 does not meet the criterion, the ninth test 132 also passes control directly to the tenth test 136.

If the tenth test 136 detects that no item is remaining in the data store 10 for testing whether it passes the criterion for automated processing on this occasion, the tenth test 136 passes control to exit 138. If the tenth test 136 detects that there are items remaining to be tested for processing criterion in the data store 10, it passes control to a twenty-second operation 140 which selects the next item from the data store 10 and passes control back to the ninth test 132.

The processes described in Figure 6 show how items from the data store 10 are selectively passed to a transaction store for automated processing.

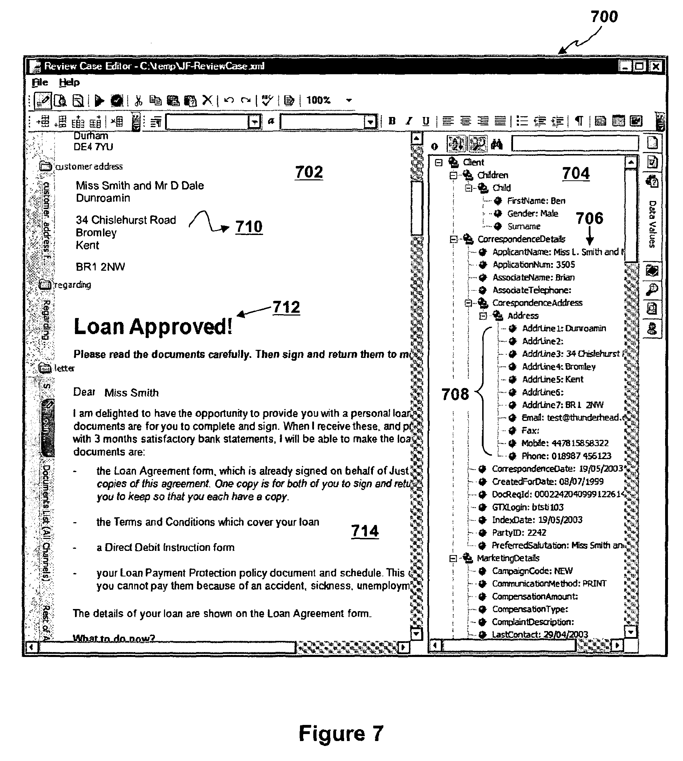

Figure 7 is a first screenshot 700 showing a document edit mode according to the present invention. A document 702 has been automatically generated by supplying transaction data 704 to a response template (not shown) in Figure 7. The transaction data 704 comprises data such as name 706 and address 708 of an applicant. The resulting document 702 comprises the name 706 and address 708 of the applicant as a textural insert 710. Other text is included in the document such as a "Loan Approved" heading 712 and in response to the conditional criteria being met for loan approval, the document 702 includes further text 714 relating to the steps an applicant should take in order to validate the offer of a loan.

In the document edit mode the text of the document can be edited by a user. An editing step may include the addition, deletion or amendment of the text of the document.

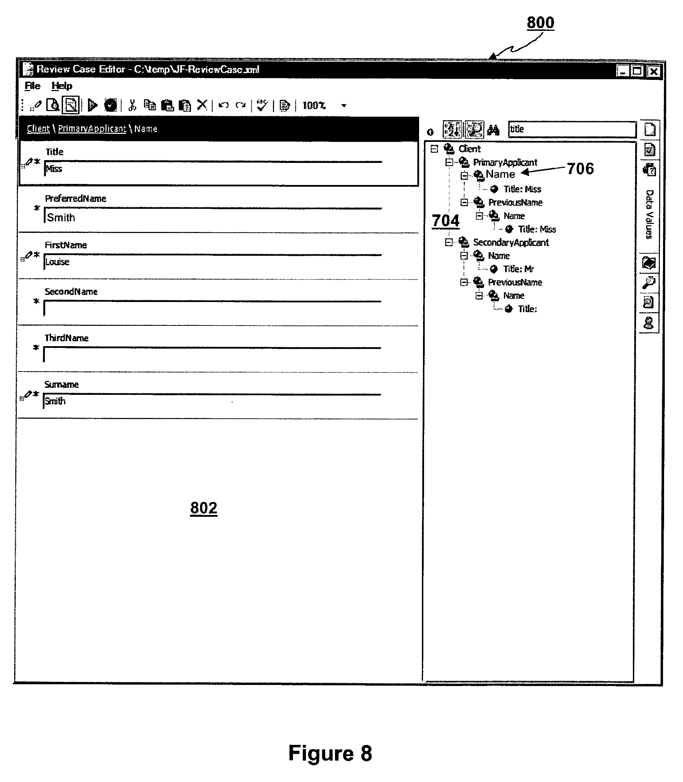

Figure 8 is a second screenshot 800 showing a data edit mode according to the present invention. The data edit mode allows editing of transaction data and as illustrated in Figure 7, the transaction data 704 includes data such as name 706 of an applicant. The data edit mode includes a data entry screen 802 which provides a graphical user interface for a user to amend the transaction data. A user's ability to amend the transaction data can be restricted by security rights. The transaction data 704 can be amended in a number of ways such as: amending a value of an existing data item; adding a value for a data item that was previously not included in the data; adding a new object to the data for example a new payment record may be added to a group of payment records; and a data item may be deleted.

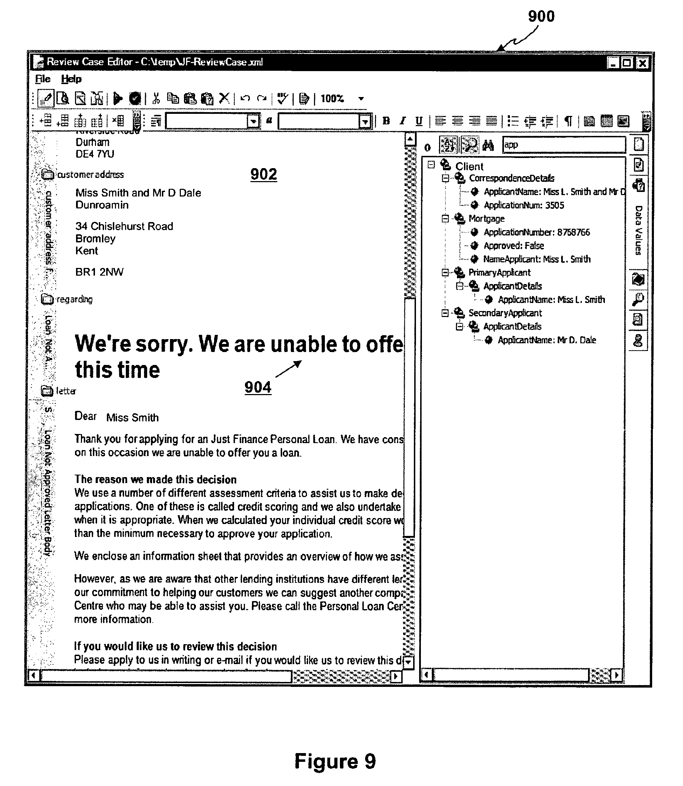

Figure 9 is a third screenshot 900 showing an amended document 902. The document 902 is an amended document because the transaction data has been amended. For example, a data has been amended which has caused the regenerated document to contain text such as a "We're sorry. We are unable to..." heading 904.

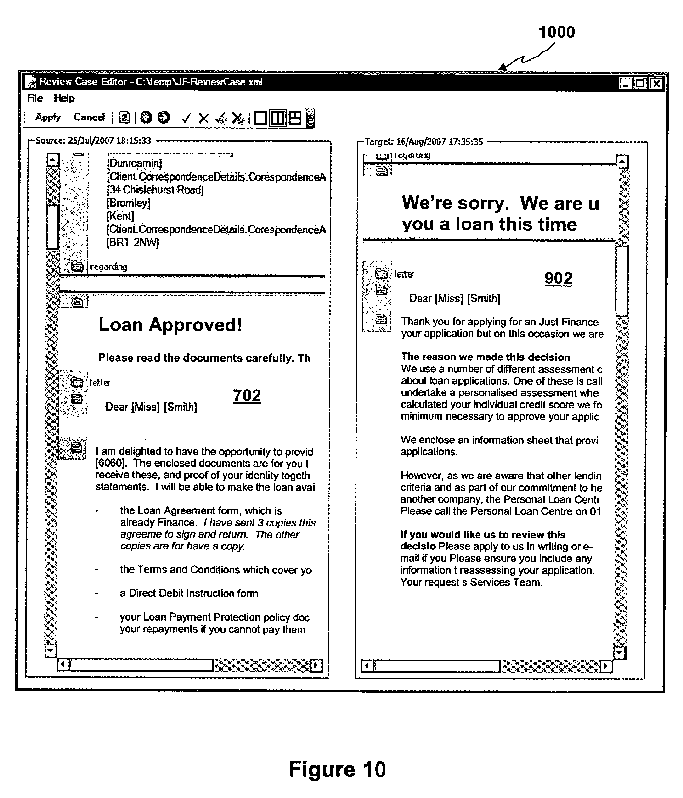

Figure 10 is a fourth screenshot 1000 showing a split screen comparison between an original and a regenerated document. Referring to Figure 10, the original document 702 illustrated in Figure 7 is compared in a side-by-side split screen format to an amended and regenerated document 902. The differences between the original document 702 and the regenerated document 902 can be highlighted using colour coding. For example, red can indicate content that has been deleted from the regenerated document 902, green can indicate content that has been newly included into the regenerated document 902 and blue can indicate content that has changed.

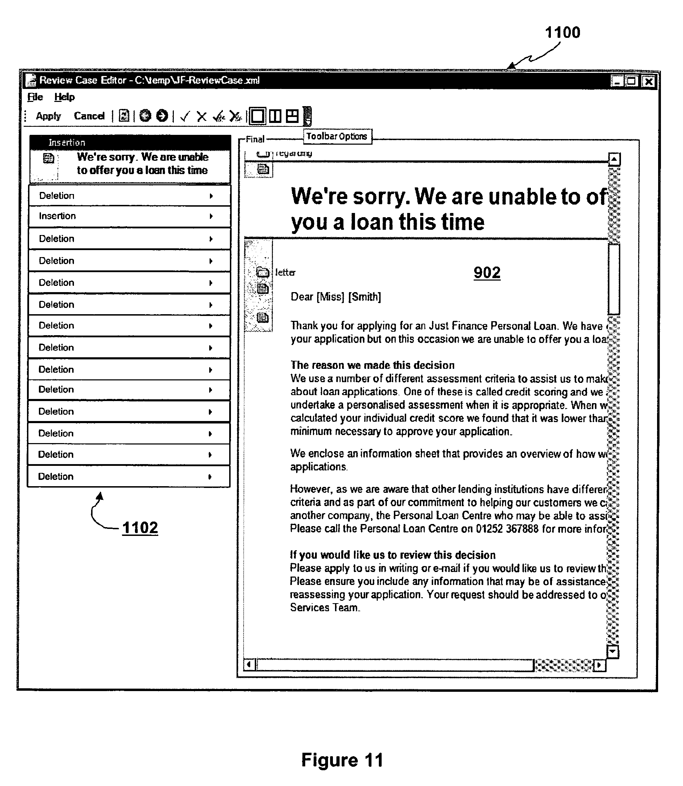

Figure 11 is a fifth screenshot 1100 showing a split screen comparison between an edited communication and a regenerated communication in which the regenerated document 902 is shown alongside a summary or list of amendments 1102.

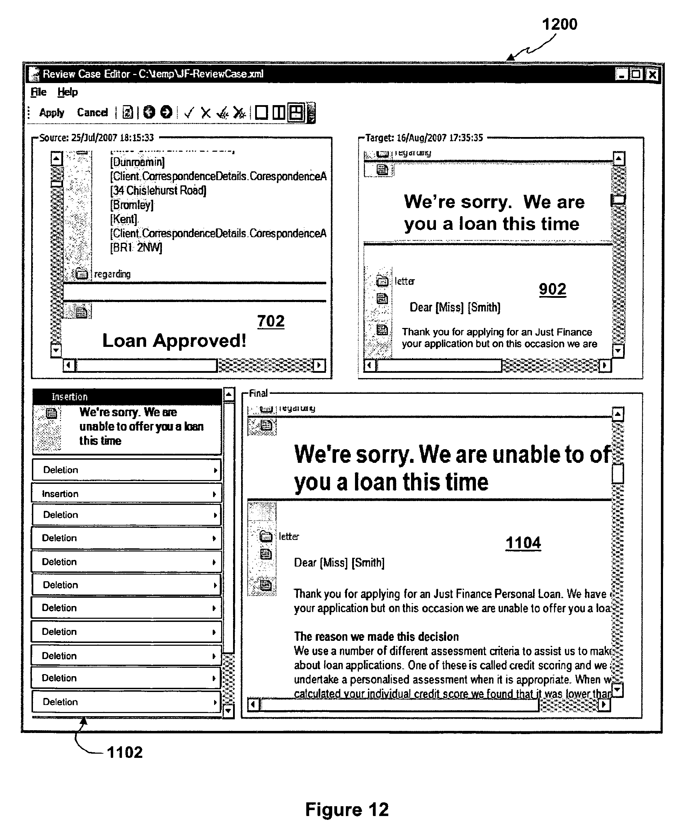

Figure 12 is a sixth screenshot 1200 showing a split screen comparison between an edited communication and a regenerated communication in which the regenerated document 902, the original document 702 and summary or list of amendments 1102 are all displayed in a same screen. The sixth screenshot 1200 may also include a final version of the document 1104 to represent the result of accepting or rejecting all or some of the changes made in both a document edit mode and a transaction data edit mode.

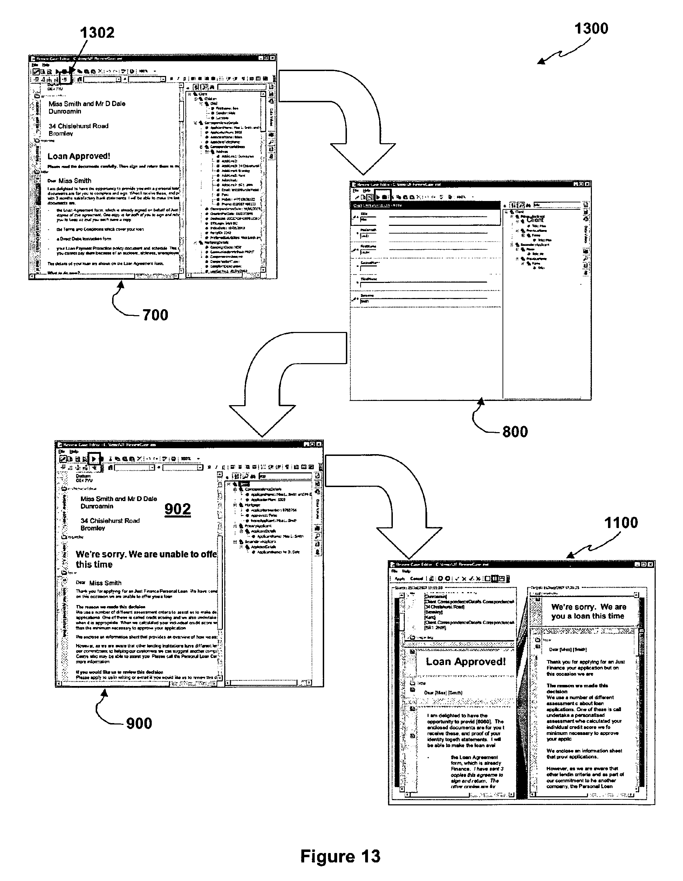

Figure 13 is a seventh screenshot 1300 showing a flow of screenshots highlighting a means of navigating between screenshots. Referring to Figure 13, each individual screenshot can be accessed by clicking an appropriate icon 1302 included in a menu bar. In this way a first screenshot 700 showing a document edit mode, a second screenshot 800 showing a data edit mode, a third screenshot 900 showing an amended document 902 and a fourth screenshot 1000 showing a split screen comparison between an original 702 and an regenerated document 902 can be conveniently viewed by cycling through the various graphical user interfaces represented by screenshots.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A method of editing and regenerating an automatic communication to be sent to a recipient, the automatic communication being generated by applying data to a response template comprising data definitions and conditional criteria, the method comprising the steps of:
automatically generating an initial communication in response to the data;
passing the initial communication to be edited;
editing the initial communication to generate an edited communication having edited changes;
regenerating the edited communication in response to data to generate a regenerated communication;
wherein the step of regenerating the edited communication includes the step of storing the edited changes optionally within the regenerated communication or as the edited communication stored in a data store.

2. A method as claimed in claim 1 including displaying the edited communication and the regenerated communication together on a split screen.

3. A method as claimed in claim 2 including highlighting any differences between the edited communication and the regenerated communication.

4. A method as claimed in any one of claims 1 to 3, including editing the regenerated communication to generate an edited regenerated communication; regenerating the edited regenerated communication in response to data to generate a further regenerated communication and storing the edited regenerated communication and the edited communication in the data store.

5. A method as claimed in claim 4 including displaying the edited regenerated communication, the edited communication and the further regenerated communication on a split screen.

6. A method as claimed in claim 4 including displaying the edited regenerated communication, the edited communication and the further regenerated communication as a list of one or more selectable options.

7. A method as claimed in any preceding claim including storing data relating to the recipient in a data store; examining the stored data to determine if a communication is to be provided to the recipient and if a communication is to be provided to the recipient extracting stored data relating to the recipient from the data store and generating the automatic communication in response to the stored data.

8. A method as claimed in any preceding claim including selecting a final communication to be sent to the recipient and sending the final communication to the recipient.

9. A method as claimed in any preceding claim wherein the data definitions point to data in the stored data, and data so pointed to is included in the selected text and data.

10. A method as claimed according to any preceding claim where the data definitions point to alternative fixed text items within the response template, and a fixed text item so pointed to is included in the selected text.

11. A method as claimed in any preceding claim wherein conditional criterion in the response template automatically activate alternative selections of text and data according to whether the criterion is met or whether the criterion is not met.

12. A method according to any preceding claim including the steps of:
selecting, in response to the data, at least one medium from among a plurality of selectable media for providing the communication to the recipient; composing the communication in a form suitable for use on the or each of said at least one selected medium; and employing the or each of the selected medium to send the communication.

13. A method as claimed in claim 12 wherein the step of composing the communication in a form suitable for use on a selected medium includes the step of applying a conditional criterion in the response template to the stored data in order to determine the medium.

14. A method as claimed in claim 13 wherein the response template includes a layout template which is used according to the selected medium.

15. A method as claimed in clam 14 wherein the layout template defines one or more place holders for content for the specific corresponding medium.

16. A carrier medium carrying software control code to, when running, implement the method of any one of claims 1 to 15.

17. A computer system for editing and regenerating an automatic communication to be sent to a recipient, the automatic communication being generated by applying data to a response template comprising data definitions and conditional criteria, the system comprising:
generation means operable to automatically generate an initial communication in response to the data;
passing means operable to pass the initial communication to be edited;
editing means operable to edit the initial communication to generate an edited communication having edited changes;
regenerating means operable to regenerate the edited communication in response to data to generate a regenerated communication;
wherein the system further comprises storing means for storing the edited changes optionally within the regenerated communication or as the edited communication stored in a data store.
